# EUROPÄISCHE PATENTSCHRIFT

(11) **EP 0 553 771 B1**
(45) Veröffentlichungstag und Bekanntmachung des Hinweises auf die Patenterteilung: **08.04.1998**
(21) Anmeldenummer: 93101146.4
(22) Anmeldetag: 26.01.1993
(51) Int. Cl.: H04M 1/72

(54) **Schnurloses Telefon**
Cordless telephone
Téléphone sans fil

(30) Priorität: 22.02.1992 DE 4205437; 29.01.1992 DE 4202372
(43) Veröffentlichungstag der Anmeldung: 04.08.1993
(73) Patentinhaber: ROBERT BOSCH GMBH, 70442 Stuttgart (DE)
(72) Erfinder: Borgmann-Fisser, Udo, Dipl.-Ing., W-3340 Wolfenbüttel (DE)

(56) Entgegenhaltungen:
- EP-A- 0 171 071
- EP-A- 0 426 452
- WO-A-90/10987
- US-A- 4 755 816
- US-A- 4 908 523

## Beschreibung

Die Erfindung geht von einem schnurlosen Telefon nach dem Oberbegriff des Anspruchs 1 aus.

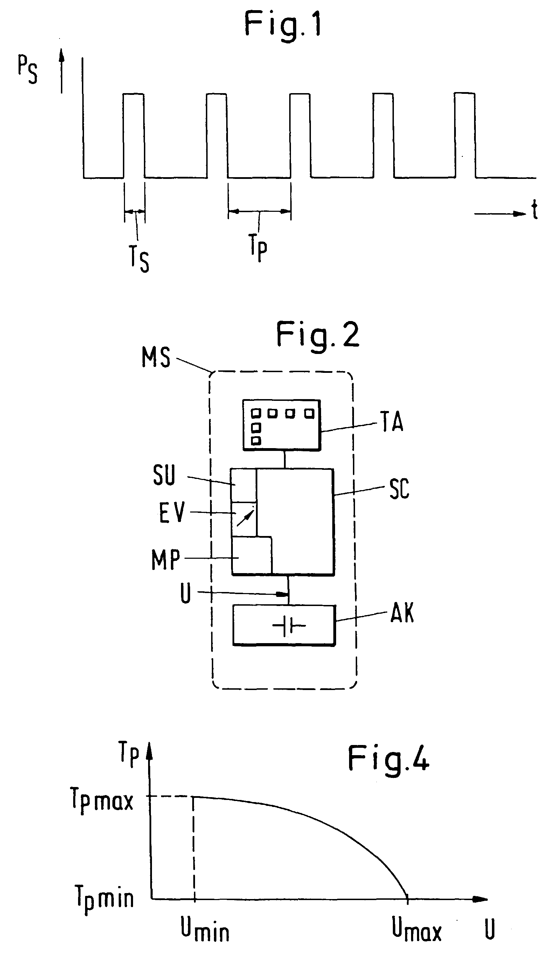

Es ist ein schnurloses Telefon bekannt, bei dem der Sendersuchlauf bei von der Feststation abgenommener Mobilstation nicht fortlaufend, sondern aus Gründen der Stromersparnis nur während bestimmter, durch gleich lange Pausen T_{P} (vgl. Figur 1) unterbrochener Sendersuchlaufzeiten T_{S} durchgeführt wird. Damit ist der Nachteil einer starren Reaktionszeit der Mobilstation verbunden, die dazu führt, daß die Mobilstation auf einen bei der Feststation ankommenden Ruf im ungünstigen Fall erst nach z. B. 5 Sekunden ein Rufzeichen abgibt. Die durch die Pause T_{P} gegebene Stromersparnis ist dabei auf einen bestimmten Wert festgelegt.

Aus der EP-A 171 071 ist ein schnurloses Telefon mit Batteriebetrieb bekannt geworden, das nicht ständig im Betrieb ist, sondern sich in einen Pausenzustand schaltet. Die portable Station weist dazu einen Zeitschaltkreis auf, mittels dem der aktive oder inaktive Zustand kontrolliert wird und der nach Wunsch eingestellt werden kann.

Der Erfindung liegt die Aufgabe zugrunde, ein schnurloses Telefon nach dem Oberbegriff des Anspruchs 1 derart weiterzubilden, daß eine fest eingestellte Betriebs-Pausenzeit vermieden wird.

Diese Aufgabe wird durch die Merkmale gemäß dem Anspruch 1 gelöst. Damit ist der Vorteil verbunden, daß bei einem auf einen bestimmten Maximalwert aufgeladenen Akkumulator die Pausendauer zwischen den Sendersuchläufen sich automatisch auf einen kleineren, einer kurzen Reaktionszeit entsprechenden Wert einstellt als bei nicht mehr voll aufgeladenem Akkumulator.

Vorteilhafte Weiterbildungen der Erfindung ergeben sich aus den abhängigen Ansprüchen.

Ein Ausführungsbeispiel der Erfindung ist in der Zeichnung anhand mehrerer Figuren dargestellt und werden im folgenden näher erläutert.

Es zeigen
Figur 1 den zeitlichen Verlauf der durch gleich lange Pausen unterbrochenen Sendersuchläufe in einer bekannten Mobilstation,
Figur 2 ein stark vereinfachtes Blockschaltbild einer Mobilstation mit manuell einestellbarer Pausendauer,
Figur 3 ein stark vereinfachtes Blockschaltbild einer erfindungsgemäßen Mobilstation mit sich automatisch einstellender Pausendauer,
Figur 4 die Abhängigkeit von Akkumulatorspannung und Pausendauer für eine Mobilstation gemäß Figur 3,
Figur 5 den zeitlichen Verlauf von Sendersuchläufen bei veränderbarer Pausendauer und
Figur 6 die Abhängigkeit des Ladestroms oder Erhaltungsstroms für den Akkumulator von der Pausendauer.

Eine Mobilstation MS enthält nach Fig. 2 eine Schaltungsanordnung SC, zu der unter anderem eine Sendersuchlaufvorrichtung SU, eine Mikroprozessorschaltung MP, eine Tastatur TA und eine Einstellvorrichtung EV zum kontinuierlichen oder stufenweisen Einstellen der Pausendauer T_{P} (vgl. Fig. 1) gehören. Für die Stromversorgung der Schaltungsanordnung SC ist in der Mobilstation ein Akkumulator AK vorgesehen. Durch ein Verringern der Pausendauer mit der Einstellvorrichtung EV wird bei unveränderter Sendersuchlaufzeit T_{S} die Reaktionszeit und die Betriebsdauer der Mobilstation MS verkürzt. Umgekehrt hat eine Verlängerung der Pausendauer bei unveränderter, weil systembedingter Sendersuchlaufzeit T_{S} eine Verlängerung der Reaktionszeit und damit auch der Betriebsdauer der Mobilstation MS zur Folge. Die Pausendauer T_{P} kann von dem Wert Null, der einem dauernden Sendersuchlauf entspricht, bis zu einem Maximalwert eingestellt werden, der einer maximal zulässigen Reaktionszeit der Mobilstation MS entspricht.

Die Realisierung der Einstellvorrichtung EV geschieht durch dem Fachmann bekannte Maßnahmen, zum Beispiel durch Einstellmittel, die auf die Mikroprozessorschaltung MP der Mobilstation MS einwirken. Ein bevorzugtes Einstellmittel bildet die Tastatur TA der Mobilstation MS. Nach dem Eintasten seines PIN-Kodes kann der Benutzer anschließend die gewünschte Pausendauer durch Eingabe einer entsprechenden Ziffer bzw. einer entsprechenden Ziffernfolge wählen.

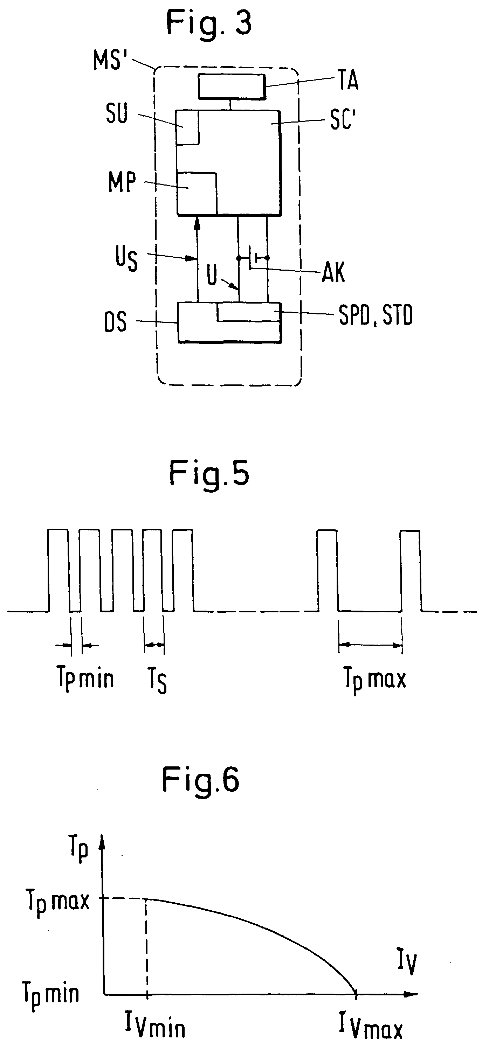

In einer alternativen Ausführung enthält eine Mobilstation MS' nach Fig. 3 eine Schaltungsanordnungs SC' wie die Einstellvorrichtung SC in Fig. 2, jedoch ohne Einstellvorrichtung EV. Ein Akkumulator AK ist mit einer Detektor- und Steuervorrichtung DS mit einem Spannungsdetektor SPD verbunden. Diese Vorrichtung DS mißt in dem Fachmann bekannter Weise die jeweils vorhandene Akkumulatorspannung U. Entsprechend dem in digitaler Form vorliegenden oder durch Analog-Digital-Wandlung erhaltenen Meßergebnis U_{S} steuert die Vorrichtung DS die zu der Schaltungsanordnung SC gehörende Mikroprozessorschaltung MP in der Weise, daß ausgehend von einer bestimmten maximalen Akkumulatorspannung Uₘₐₓ (vgl. Fig. 4), bei der die Pausendauer T_{P} einen Minimalwert T_{Pmin} annimmt, die Pausendauer T_{P} stufenweise oder kontinuierlich zunimmt, bis sich bei einer minimalen Akkumulatorspannung Uₘᵢₙ eine bestimmte maximale Pausendauer T_{Pmax} einstellt; vgl. auch Fig. 5. Bei der maximalen Pausendauer T_{Pmax} findet somit der den Akkumulator AK belastende Sendersuchlauf nur in größeren, die Batterie weniger belastenden Zeitabständen statt. Die kürzeste Pausendauer T_{Pmin} kann im Grenzfall gleich Null gewählt sein.

Nach einer weiteren Ausführung der Erfindung wird die Pausendauer T_{P} in Abhängigkeit von der jeweiligen Stärke des Lade- oder Erhaltungsstroms für den Akkumulator AK der Mobilstation MS' verändert; vgl. Fig. 6. Diese Art der Steuerung der Pausendauer T_{P} kommt vorzugsweise zur Anwendung, wenn der in der Mobilstation MS' (Fig. 3) enthaltene Akkumulator AK über ein Steckernetzteil oder ein Netzteil einer separaten Ablage für die Mobilstation MS' aufgeladen oder nachgeladen wird. In diesem Fall weist die Detektor- und Steuervorrichtung DS der Mobilstation MS' einen Stromdetektor STD auf, der den jeweiligen Ladestrom oder Ladeerhaltungsstrom mißt und eine dem Meßergebnis entsprechende digitale Steuerspannung U_{S} an die Mikroprozessorschaltung MP weiterleitet, die die Pausendauer T_{P} entsprechend ändert.

Der dem Akkumulator AK zugeführte Ladestrom I_{V} (Fig. 6) hat vorzugsweise einen Wert, der der Summe von mittlerem Betriebsstrom und dem vorgeschriebenen Ladestrom für den Akkumulator entspricht. Wird dem Akkumulator AK der Mobilstation MS' ein Erhaltungsstrom zugeführt, der zum Beispiel einem Zehntel des maximalen Ladestroms I_{V} entspricht, dann sollte der Erhaltungsstrom mindestens der Summe von normalem Erhaltungsstrom und von dem Versorgungsstrom für die Sendersuchlaufvorrichtung SU entsprechen.

Die Schaltungsanordnung SC einschließlich der Sendersuchlaufvorrichtung SU und der Mikroprozessorschaltung MP können vorzugsweise zusammen mit der Detektor- und Steuervorrichtung DS als integrierter Baustein ausgebildet werden.

## Patentansprüche

1. Schnurloses Telefon aus einer Feststation und mindestens einer Mobilstation, wobei die Feststation und die Mobilstation je eine Sendersuchlaufvorrichtung enthalten, die Mobilstation aus ihrem Akkumulator gespeist wird und die Sendersuchlaufvorrichtung der Mobilstation bei nicht auf der Feststation abgelegter Mobilstation den Sendersuchlauf nur in durch Pausen getrennten Sendersuchlaufzeiten durchführt, dadurch gekennzeichnet, daß in der Mobilstation (MS') eine Detektor- und Steuervorrichtung (DS) vorgesehen ist, die die Pausendauer (T_{P}) in Abhängigkeit von dem jeweiligen Ladezustand des Akkumulators (AK) derart verändert, daß die Pausendauer (T_{P}) mit abnehmender Ladung größer und mit zunehmender Ladung kleiner wird.

2. Schnurloses Telefon nach Anspruch 1, dadurch gekennzeichnet, daß zur Ermittlung des Ladezustandes des Akkumulators (AK) der Mobilstation (MS') ein zu der Detektor- und Steuervorrichtung (DS) gehörender Spannungsdetektor (SPD) zum Messen der Akkumulatorspannung (U) vorgesehen ist.

3. Schnurloses Telefon nach Anspruch 1, dadurch gekennzeichnet, daß zur Ermittlung des Ladezustandes des Akkumulators (AK) ein zu der Detektor- und Steuervorrichtung (DS) gehörender Stromdetektor (STD) zum Messen des Ladestroms (I_{V}) bzw. Erhaltungsstroms für den Akkumulator (AK) vorgesehen ist.

4. Schnurloses Telefon nach einem der Ansprüche 1 bis 3, dadurch gekennzeichnet, daß die Pausendauer (T_{P}) kontinuierlich veränderbar ist.

5. Schnurloses Telefon nach einem der vorhergehenden Ansprüche, dadurch gekennzeichnet, daß der Ladestrom (I_{V}) für den Akkumulator (AK) mindestens der Summe von normalem Ladestrom für den Akkumulator und dem mittleren Betriebsstrom für die Mobilstation (MS') entspricht.

6. Schnurloses Telefon nach einem der vorhergehenden Ansprüche, dadurch gekennzeichnet, daß der Erhaltungsstrom für den Akkumulator (AK) mindestens der Summe von normalem Erhaltungsstrom und dem Versorgungsstrom für die Sendersuchlaufvorrichtung (SU) der Mobilstation (MS') entspricht.

## Claims

1. Cordless telephone comprising a fixed station and at least one mobile station, the fixed station and the mobile station each containing a transmitter search apparatus, the mobile station being supplied from its accumulator and the transmitter search apparatus of the mobile station, when the mobile station is not placed down on the fixed station, carrying out the transmitter search only in transmitter search times separated by pauses, characterized in that the mobile station (MS') has provided in it a detector and control apparatus (DS) which changes the pause duration (Tp) as a function of the respective charge level of the accumulator (AK), in such a manner that the pause duration (Tp) becomes greater as the charge reduces and becomes less as the charge increases.

2. Cordless telephone according to Claim 1, characterized in that the charge level of the accumulator (AK) of the mobile station (MS') is determined by a voltage detector (SPD), which is part of the detector and control apparatus (DS), for measuring the accumulator voltage (U).

3. Cordless telephone according to Claim 1, characterized in that the charge level of the accumulator (AK) is determined by a current detector (STD), which is part of the detector and control apparatus (DS), for measuring the charging current (I_{V}) and the maintain current for the accumulator (AK).

4. Cordless telephone according to one of Claims 1 to 3, characterized in that the pause duration (Tp) is continually variable.

5. Cordless telephone according to one of the preceding claims, characterized in that the charging current (I_{V}) for the accumulator (AK) corresponds at least to the sum of the normal charging current for the accumulator and the mean operating current for the mobile station (MS').

6. Cordless telephone according to one of the preceding claims, characterized in that the maintain current for the accumulator (AK) corresponds at least to the sum of the normal maintain current and the supply current for the transmitter search apparatus (SU) in the mobile station (MS').

## Revendications

1. Téléphone sans fil comprenant un poste fixe et au moins un poste mobile équipés chacun d'un dispositif de recherche d'émetteur, le poste mobile étant alimenté par son propre accumulateur, tandis que son dispositif de recherche d'émetteur, lorsque le poste mobile n'est pas posé sur le poste fixe, ne procède à la recherche d'émetteur que pendant des périodes entrecoupées de pauses,
caractérisé en ce que
le poste mobile (MS') contient un dispositif de détection et de commande (DS) qui fait varier la durée de pause (Tₚ) en fonction de l'état de charge de l'accumulateur (AK), cette durée de charge (T_{P}) est croissante et décroissante avec la charge.

2. Téléphone sans fil selon la revendication 1,
caractérisé en ce que
pour déterminer l'état de charge de l'accumulateur (AK) du poste mobile (MS'), il est prévu dans le dispositif (DS) de détection et de commande, un détecteur de tension (SPD) pour mesurer la tension (U) de l'accumulateur.

3. Téléphone sans fil selon la revendication 1,
caractérisé en ce que
pour déterminer l'état de charge de l'accumulateur (AK), il est prévu dans le dispositif (DS) de détection et de commande, un détecteur d'intensité (STD) pour mesurer la tension de charge (I_{V}) ou l'intensité de maintien de l'accumulateur (AK).

4. Téléphone sans fil selon les revendications 1 à 3,
caractérisé en ce que
la durée (Tₚ) de la pause peut être variée de manière continue.

5. Téléphone sans fil selon les revendications précédentes,
caractérisé en ce que
l'intensité de charge (I_{V}) de l'accumulateur (AK) est au moins égal à la somme de l'intensité normale de charge de cet accumulateur et de l'intensité normale de fonctionnement de poste mobile.

6. Téléphone sans fil selon une des revendications précédentes,
caractérisé en ce que
l'intensité de maintien de l'accumulateur (AK) est au moins égale à la somme de l'intensité normale de maintien et de l'intensité d'alimentation du dispositif de recherche d'émetteur (SU) du poste mobile (MS').
